# EUROPEAN PATENT APPLICATION

(11) **EP 3 407 509 A1**
(43) Date of publication of application: **28.11.2018**
(21) Application number: 17173008.8
(22) Date of filing: 26.05.2017
(51) Int. Cl.: H04B 10/112, H04B 10/116, H04B 10/118

(54) **COMMUNICATION SYSTEM AND COMMUNICATION METHOD**

(71) Applicant: Vestel Elektronik Sanayi ve Ticaret A.S., 45030 Manisa (TR); Özyegin Üniversitesi, 34794 Çekmeköy/ Istanbul (TR)
(72) Inventor: GÜLBAHAR, Burhan, 34794 Çekmeköy/Istanbul (TR); MEMISOGLU, Gorkem, 45030 Manisa (TR)
(74) Representative: Ascherl, Andreas

(57) **Abstract**

The present invention provides a communication system (100, 400) for communicating data to a moving vessel (101, 401), the communication system (100, 400) comprising a high altitude light modulation unit (102, 202, 402) configured to orbit over the earth's surface (150) and regionally modulate incoming sunlight (103, 403) onto the earth's surface (150) according to a downlink data stream (107, 207, 307, 407), and an incoming light demodulation unit (108, 308, 408) arranged on the moving vessel (101, 401) and configured to demodulate the regionally modulated sun light to recover the downlink data stream (107, 207, 307, 407) in the moving vessel (101, 401). The present invention further provides a corresponding communication method.

## Description

### TECHNICAL FIELD

The invention relates to a communication system for communicating data to a moving vessel. Further, the invention relates to a respective communication method.

### BACKGROUND

Although applicable to any system that is used to communicate data to moving vessels, the present invention will mainly be described in conjunction with an aircraft.

The demand for data communication is increasing in modern society. Especially mobile devices, like e.g. smartphone or laptops, may require data communication for specific functions to perform properly. It is however especially challenging to provide a robust and high-bandwidth data communication for high-speed moving vessels, like e.g. aircraft.

Communication of data streams to aircraft may e.g. be provided via satellites that transmit data via an RF link to the respective aircraft. However, satellite-based communication requires the receiving antenna being focused on the satellite. Therefore complex electro-mechanical arrangements need to be provided to track the satellite with the antenna.

Accordingly, there is a need for improving data communication with aircraft.

### SUMMARY OF THE INVENTION

The present invention provides a communication system with the features of claim 1 and a communication method with the features of claim 8.

Therefore it is provided:
A communication system for communicating data to a moving vessel, the communication system comprising a high altitude light modulation unit configured to orbit over the earth's surface and regionally modulate incoming sunlight onto the earth's surface according to a downlink data stream, and an incoming light demodulation unit arranged on the moving vessel and configured to demodulate the regionally modulated sun light to recover the downlink data stream in the moving vessel.

Further, it is provided:
A communication method for communicating data to a moving vessel, the communication method comprising orbiting a high altitude light modulation unit over the earth's surface, regionally modulating incoming sunlight onto the earth's surface according to a downlink data stream with the high altitude light modulation unit, and demodulating the regionally modulated sun light with an incoming light demodulation unit in the moving vessel to recover the downlink data stream.

The present invention may e.g. be used with an aircraft or the like as moving vessels that may move at high altitudes with several hundreds of kilometers per hour. It is however understood that other possible vessels comprise trains, ships, cars or trucks or the like.

The present invention is based on the finding that it is difficult to maintain RF communications with increasing speed of the moving vessel.

The present invention therefore provides the high altitude modulation unit. High altitude in the context of the modulation unit refers to the modulation unit orbiting or flying higher over the earth's surface than the moving vessel. An aircraft may e.g. fly on a predefined flight path with a predetermined altitude over the earth's surface.

The high altitude modulation unit may e.g. comprise or be arranged on a satellite or a flying vessel like e.g. a high altitude pseudo satellite platform. Such a high flying platform is exposed to direct incident sunlight and my use the incident sunlight as a data carrier. The high altitude modulation unit may e.g. regionally modulate the incident sunlight onto the earth's surface. Regionally modulate in this context refers to the high altitude modulation unit modulating the incoming light differently on different regions or sections of the surface of the earth.

The different regions or sections may e.g. correspond to different regions or sections of a path of the moving vessel. This means that once the modulation pattern is set for the different sections or regions of the path of movement the moving vessel, the moving vessel will automatically receive differently modulated light with the incoming light demodulation unit while moving on its predetermined path without the high altitude modulation unit changing the modulation pattern. This arrangement therefore has the advantage that the rate of the data transmission increases with the speed of movement of the moving vessel, since it travels the single sections or regions with increased speed.

The downlink data stream may e.g. be a high bandwidth data stream that is provided to the high altitude light modulation unit from e.g. a ground station or from a satellite or the like. The content of the high bandwidth data stream may e.g. be predetermined. The high bandwidth data stream may e.g. comprise multimedia data, like e.g. videos, that are presented to passengers on an aircraft during a flight. The downlink data stream may also be generated on request. The moving vessel may e.g. comprise a low speed uplink data interface that allows the passengers of the moving vessel requesting specific content that may then be provided by the high altitude light modulation unit via the modulated light.

The incoming light demodulation unit may e.g. comprise light sensors to sense the incoming modulated light and provide respective electric signals, and a respective control unit or demodulation device that processes the electric signals and reconstructs the original downlink data stream.

Further embodiments of the present invention are subject of the further subclaims and of the following description, referring to the drawings.

In an embodiment, the high altitude light modulation unit may comprise a controllable optical arrangement, especially comprising controllable mirrors and/or controllable prisms and/or controllable lenses, configured to modulate and/or direct the incoming sunlight.

The term controllable regarding the optical arrangement, the mirrors, the prims or the lenses may refer to controlling the position and/or orientation as well as the optical properties.

The mirrors, prisms and/or lenses may e.g. comprise micromechanical or microelectromechanical (MEMS) devices that may be integrated into a respective optical MEMS system with respective actuators. As an alternative the mirrors, prisms and/or lenses may e.g. comprise discrete elements that may be positioned by electric actuators.

The mirrors, prisms and/or lenses may e.g. serve to direct, spread and/or focus the incoming sunlight such that it may be provided to the required regions and or sections of the path of the moving vessel.

It is understood, that the size of the regions or sections may be adapted to the resolution that the filters, mirrors and prisms provide as well as the speed of adjustment of the filters, mirrors and prisms.

In an example, incoming sunlight may e.g. be refracted and therefore separated by wavelength with prisms. Controllable mirrors may then mirror the respective color onto a lens that then spreads the respectively colored light to the required region. Such a lens may e.g. be a concave lens.

The high altitude light modulation unit or the controllable optical arrangement may also comprise beam shaping devices, that e.g. provide the outgoing light with a bar- or line-shape, as e.g. in line-lasers. With such shaping devices, the single regions or sections may be very narrow in the direction of movement of the moving vessel. Therefore a high data rate may be achieved with the small and therefore quickly changing modulation regions. At the same time such bar- or line-shaped modulation regions allow the moving vessel to deviate from the ideal or central path without losing reception of the modulated light.

As already explained above, the moving vessel may travel on a predetermined path, like e.g. a plane on a flight path. Said path may be logically split or divided into single sections or regions by the high altitude light modulation unit. The high altitude light modulation unit may transmit data to the moving vessel by providing every single section or region with light of a specific wavelength, e.g. of a specific color. Such a modulation may e.g. be referred to as "space-path" modulation.

Regarding the colored light example, every light color may represent a specific binary value. If e.g. only two colors are provided a first color may represent a binary "1" and a second color may represent a binary "0". If e.g. four colors are provided, a first color may represent a binary "00", a second color may represent a binary "01", a third color may represent a binary "10" and a fourth color may represent a binary "11". In general, one color may be provided for every symbol that is provided for transmission. Four colors may e.g. be used to transport four symbols as explained above. It is understood however, that the wavelength of the light may also be e.g. in the infrared light band.

A sequence of 01 00 11 10 may e.g. be transmitted by providing four consecutive regions or sections with the second color, the first color, the fourth color and the third color, respectively.

It is understood, that the above arrangement is just exemplarily provided and that further elements may be added as necessary. Further mirrors and/or lenses may e.g. be provided that focus the incoming sunlight onto the prism or the optical arrangement in general.

The incoming light demodulation unit may in case of a modulation by different colors e.g. comprise sensors that are sensitive to the colors used for modulation. The demodulation device in the incoming light demodulation unit may map the single sensors to specific data symbols. For receiving, the demodulation device may then simply concatenate the respective data symbols in the order in which the single sensors sense the respective color.

In another embodiment, the controllable optical arrangement may comprise a plurality of filters and may be arranged to regionally modulate the incoming sunlight by providing light of specific wavelengths with the filters, e.g. for different regions of the earth's surface or for different regions and/or sections of the path of the moving vessel.

Specific filters may provide an improved filter slope or steepness as compared to the above mentioned prisms. The filters may therefore substitute or complement the above mentioned prisms.

The filters may be provided as fixed color or wavelength filters. That means that one filter will always let pass light of the same wavelength(s). The light may then be directed to the specific region e.g. with the controllable mirrors, prisms and lenses. As an alternative, the filters may also be controllable or adjustable, e.g. regarding the wavelength(s) that the respective filter passes through.

The number of filters in the high altitude light modulation unit may e.g. correspond to the single regions or sections that should be provided with modulated light concurrently multiplied by the number of colors. If e.g. four regions at a time should be provided with a modulated light signal, the high altitude light modulation unit may comprise four times the color filters for every color. This would e.g. allow the high altitude light modulation unit to adjust the filter for the first modulation region after the moving vessel crosses the first region to modulate the light in a fifth region and so on.

It is however understood, that the number of filters in the high altitude light modulation unit may also be higher and e.g. provide enough filters to provide a plurality of vessels or their respective flight paths with modulated light in different regions or sections at the same time.

In an embodiment, the high altitude light modulation unit may comprise a modulator that is configured to controllably absorb or allow transmission of the incoming sunlight.

In the above examples, the modulation is implicitly provided by providing specific regions with specifically colored light. With the modulator it is now possible to provide an additional data modulation to the single regions, e.g. by performing an amplitude modulation or on/off keying of the specifically colored light.

In a further embodiment, the modulator may comprise a graphene-based modulator that is configured to modulate the incoming sunlight.

Graphene-based modulators are very light-weight devices that may e.g. be provided as a thin layer over another one of the optical devices, e.g. the mirrors and/or lenses and/or prisms. Such a graphene-based modulator may therefore easily be provided in the high altitude light modulation unit without adding much weight or complexity.

In another embodiment, the high altitude light modulation unit may comprise an energy harvesting device.

Such an energy harvesting device may e.g. comprise solar panels that produce electrical energy based on incident sunlight. The energy harvesting device may alternatively comprise an electric circuit coupled to the above mentioned graphene-based modulator that harvests electrical energy whenever the graphene-based modulator is controlled to absorb the incoming sunlight.

It is understood, that the energy harvesting device may also comprise an energy storage to store the harvested electrical energy to operate the high altitude light modulation unit.

In an embodiment, the high altitude light modulation unit may comprise a synchronization unit configured to synchronize the high altitude light modulation unit with the moving vessel.

Synchronizing in this context refers to synchronizing the position and/or orientation and/or speed of the moving vessel with the regions or sections that are provided with modulated light by the high altitude light modulation unit. The synchronization may be seen as an overlay of the actual path, position, orientation and/or speed of the moving vessel and the regions/sections calculated by the high altitude light modulation unit. The synchronization will therefore effectively provide for the correctly modulated light to be provided at the correct position at the correct time.

The synchronization unit may e.g. comprise a communication device for communication with the moving vessel or another entity that may provide the exact details about the position, orientation and/or speed of the moving vessel, e.g. an avionics ground control station. The moving vessel or the other entity may e.g. also provide the path of the moving vessel to the synchronization unit. This will allow the synchronization unit to predetermine the next regions or sections that must be provided with modulated light.

The synchronization unit may e.g. comprise a control unit, like e.g. a processor or the like, that performs the communication with the moving vessel or the other entity. Such a control unit may also accommodate further functions, like e.g. the control of the mirrors, prisms, lenses and/or filters. As an alternative, the synchronization unit or the control unit of the synchronization unit may be provided in a control device of the high altitude light modulation unit that is e.g. provided to control the mirrors, prisms, lenses and/or filters.

The high altitude light modulation unit, e.g. in the synchronization unit, may further comprise position and/or orientation sensors that allow determining the position and/or orientation of the high altitude light modulation unit. This information may then be used to perform the mapping with the synchronization unit. The position and/or orientation sensors may e.g. be GPS-based sensors, magnetic sensors or the like or comprise a ground-supported position determination.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
- Fig. 1: shows a block diagram of an embodiment of a communication system according to the present invention;
- Fig. 2: shows a block diagram of an embodiment of a high altitude light modulation unit according to the present invention;
- Fig. 3: shows a block diagram of an embodiment of an incoming light demodulation unit according to the present invention;
- Fig. 4: shows a block diagram of another embodiment of a communication system according to the present invention; and
- Fig. 5: shows a flow diagram of an embodiment of a communication method according to the present invention.

In the figures like reference signs denote like elements unless stated otherwise.

### DETAILED DESCRIPTION OF THE DRAWINGS

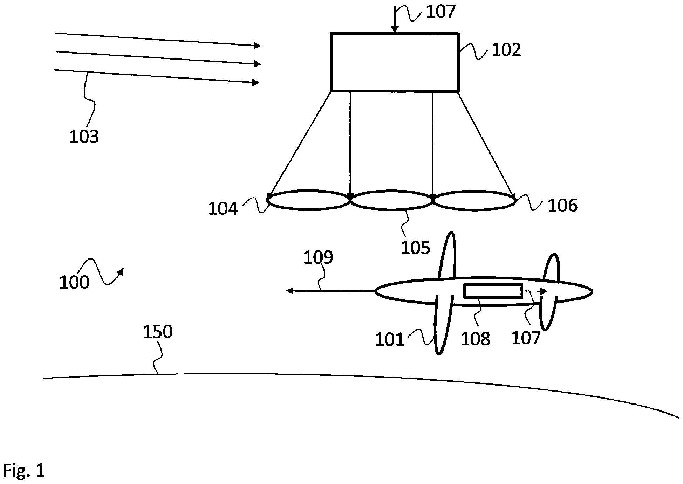

Fig. 1 shows a block diagram of a communication system 100. The communication system 100 comprises a high altitude light modulation unit 102 and an incoming light demodulation unit 108 that is arranged on a moving vessel 101. Although the moving vessel 101 is shown as an aircraft, it is understood that the moving vessel 101 may also be any other type of vessel, e.g. a train, a ship, a truck or the like.

The high altitude light modulation unit 102 may e.g. be satellite-based or be provided on a high altitude flying vessel that may be used as long-time or semi-permanent flying communication platform. Such a flying vessel in high altitude may e.g. be a solar powered glider, a zeppelin or a balloon or the like.

The high altitude light modulation unit 102 receives incoming sunlight 103 and uses the incoming sunlight 103 to provide modulated light in different modulation regions 104, 105, 106 based on a downlink data stream 107, i.e. the modulated light carries or transports the downlink data stream 107. The high altitude light modulation unit 102 however will not modulate the complete downlink data stream 107 into a single outgoing modulated light stream for a single one of the modulation regions 104, 105, 106. Instead, the high altitude light modulation unit 102 will provide different modulation regions 104, 105, 106, wherein every one of the modulation regions 104, 105, 106 will carry a part of the downlink data stream 107. The downlink data stream 107 may e.g. be provided to the high altitude light modulation unit 102 via another data or communication link that may e.g. be satellite based.

The modulation regions 104, 105, 106 will be provided by the high altitude light modulation unit 102 in the direction of movement 109 of the moving vessel 101. That means that the moving vessel 101 will cross the single modulation regions 104, 105, 106 while moving forward. The high altitude light modulation unit 102 will therefore provide the content of the downlink data stream 107 distributed over the single modulation regions 104, 105, 106 in the respective order. This means that the downlink data stream 107 will sequentially be distributed over the modulation regions 104, 105, 106 such that the moving vessel 101 will receive the content of the downlink data stream 107 in the correct order. This allows easily recreating the downlink data stream 107 with the incoming light demodulation unit 108 by concatenating the data received in the single modulation regions 104, 105, 106.

The high altitude light modulation unit 102 may e.g. modulate the content of the downlink data stream 107 by providing light of different wavelengths in the single modulation regions 104, 105, 106. As already explained, a single wavelength may be used for every symbol that has to be transmitted in the modulation regions 104, 105, 106. If for example four symbols, e.g. binary "00", "01", "10", "11", are to be transmitted, four different wavelengths may be provided.

It is also possible to use the different wavelengths for a binary code. This means that if e.g. three wavelengths can be provided by the high altitude light modulation unit 102, a three bit value may be transported in every one of the modulation regions 104, 105, 106. The three wavelengths may e.g. be provided by the high altitude light modulation unit 102 as light of different colors, like e.g. red, green, blue. The first color, e.g. red, may represent the most significant bit, the second color, e.g. green, may represent the center bit, and the third color, e.g. blue, may represent the least significant bit.

To make it possible to differentiate the modulated light from direct sunlight in the moving vessel 101, the high altitude light modulation unit 102 may e.g. use an on/off keying with a predetermined frequency. This means that the incoming light demodulation unit 108 will not only sense for incoming light of the respective wavelength but will also require the light to be turned on/off with the respective frequency. It is understood, that the frequency may be chosen according to the speed of movement of the moving vessel 101. The frequency must e.g. be high enough to allow the incoming light demodulation unit 108 to determine the on/off frequency of the modulated light in a single one of the modulation regions 104, 105, 106 before leaving the respective modulation region 104, 105, 106. Such on/off keying may e.g. be performed with modulators that are provided in the optical arrangement of the high altitude light modulation unit 102. For example graphene-based optical modulators may be provided in the optical arrangement that may be controlled to pass-through or to absorb the incoming light.

Although not explicitly shown, it is understood that the high altitude light modulation unit 102 may e.g. comprise an energy harvesting unit that allows the high altitude light modulation unit 102 to operate autonomously. Such an energy harvesting unit may e.g. comprise solar panels. As alternative or in addition, graphene-based modulators may harvests electrical energy whenever the graphene-based modulators are controlled to absorb the incoming sunlight. An energy storage may also be provided in the energy harvesting device.

The incoming light demodulation unit 108 may e.g. comprise wavelength dependent sensors (not explicitly shown) that only react to light of the respective wavelength. Such sensors may e.g. comprise a respective color filter. If for example the value of "111" is to be transmitted, all three colors may be provided in the respective one of the modulation regions 104, 105, 106 and all three of the sensors in the incoming light demodulation unit 108 will detect the respective modulated light. The value of 010 will be transmitted by only providing light with the second color, e.g. green.

In the moving vessel 101 the reconstructed downlink data stream 107 may then e.g. be provided to electronic equipment, e.g. to an on-board entertainment system or the like.

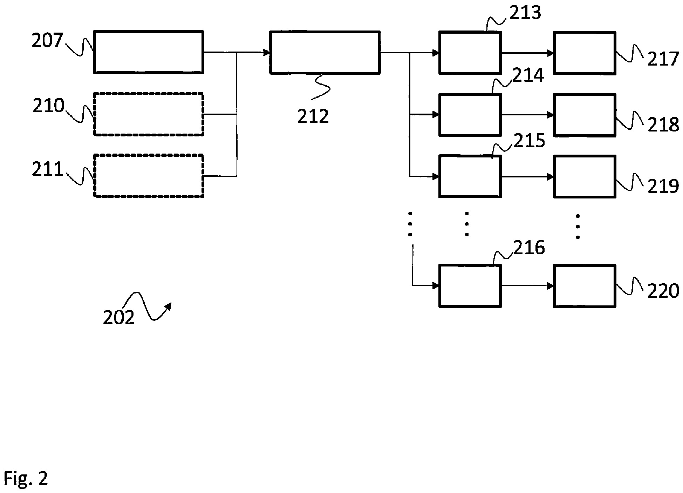

Fig. 2 shows a block diagram of an embodiment of a high altitude light modulation unit 202. In the high altitude light modulation unit 202 different input data is used to modulate the outgoing light as required.

The downlink data stream 207 forms the basis for the modulation of the outgoing light. In addition to the downlink data stream 207 further information, like e.g. path data 210 and/or geographic data 211 may be provided in the high altitude light modulation unit 202.

A color filter 212 is provided that separates the incoming sunlight into light of different colors 213, 214, 215, 216 and provides the light of different colors 213, 214, 215, 216 to mirrors 217, 218, 219, 220. The mirrors 217, 218, 219, 220 may then direct the light of different colors 213, 214, 215, 216.

The path data 210 may e.g. comprise data about the position and/or intended path of movement of the moving vessel. The geographic data 211 may comprise data about the position of the high altitude light modulation unit 202 in relation to the earth. With the help of the geographic data 211 the path data 210 may e.g. be mapped to the single modulation regions, i.e. the path may be segmented into the single modulation regions.

The color filter 212 may e.g. be a non-controllable or passive optical filter element that splits the incoming sunlight into rays of light with different colors. The color filter 212 may however also be an active element that may be controlled to generate light of specific colors only, based on the downlink data stream 207, and e.g. the path data 210 and the geographic data 211. For example, graphene-based modulators may be provided on single differently colored elements of the color filter 212 that controllably absorb light or pass-through light. As an alternative, the modulation may be performed in the mirrors that may e.g. deflect the not-needed color light away from the modulation regions.

The mirrors 217, 218, 219, 220 in general may each serve to direct light of a specific color to a specific one of the modulation regions. As explained above, it is possible that only a single color is directed to a single modulation region, each color representing one symbol. As an alternative a plurality of colors may be directed to the modulation regions, each color e.g. representing one binary bit. On/off keying of the outgoing light may e.g. be performed with modulators on the mirrors 217, 218, 219, 220 or e.g. with the above mentioned modulators on the color filter 212.

Although not separately shown, it is understood, that the high altitude light modulation unit 202 may e.g. comprise a control device or control unit that controls all elements of the high altitude light modulation unit 202 to perform the required modulation and direct the outgoing modulated light to the respective modulation regions. The control unit may e.g. also perform communication with a ground station that provides the downlink data stream. Such a control unit may e.g. be a dedicated control unit or may be integrated into another control unit that e.g. manages the flight of the vessel that carries the high altitude light modulation unit 202, e.g. a satellite.

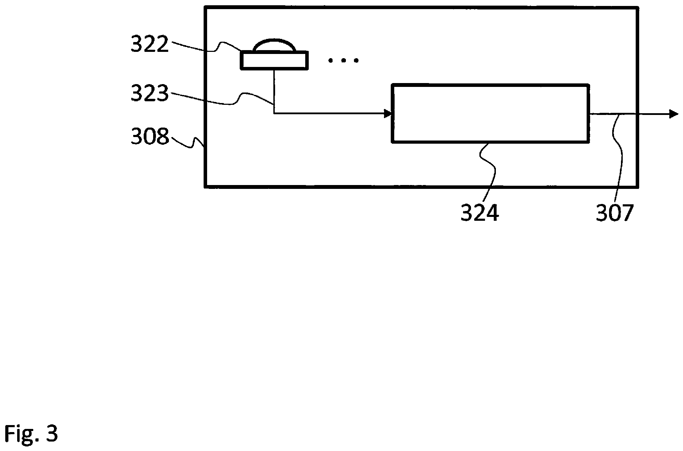

Fig. 3 shows a block diagram of an embodiment of an incoming light demodulation unit 308. The incoming light demodulation unit 308 comprises a sensor 322. The sensor 322 may e.g. be a light sensor that senses light of a plurality of colors and provides a respective electrical signal 323. Three dots indicate that more sensors are possible. For example a single sensor may be provided for every wavelength that is used to transmit/modulate the downlink data stream.

The sensor 322 is coupled to the demodulator 324 and provides the electrical signal 323 to the demodulator 324. The demodulator 324 reconstructs the downlink data stream 307 based on the electrical signal 323. The demodulator 324 may e.g. map a specific value of the electrical signal 323 to specific symbols or data of the downlink data stream 307. In a four color system, as explained above, if the electrical signal 323 indicates light of a first color, the demodulator 324 may output a binary value of "00", if the electrical signal 323 indicates light of a second color, the demodulator 324 may output a binary value of "01", if the electrical signal 323 indicates light of a third color, the demodulator 324 may output a binary value of "10", and if the electrical signal 323 indicates light of a fourth color, the demodulator 324 may output a binary value of "11 ".

The demodulator 324 may e.g. detect a new symbol when the moving vessel crosses the border between two modulation regions. The demodulator 324 may e.g. be coupled to a navigation system of the moving vessel in order to determine the borders. However, one modulation region is only provided with constant modulated light and a downlink data stream is transported by the sequence of constant modulated lights. Therefore, the demodulator 324 may automatically detect a new symbol, whenever the electrical signal 323 changes.

As an alternative, every modulation region may be provided with more than one color. As explained above, this allows providing a binary code. In this case the above also applies. The demodulator 324 may detect a new symbol whenever the state of the sensors changes.

The sensor(s) 322 may e.g. be provided on the upper surface of the moving vessel. For example sensor(s) 322 may be provided on the wings or the fuselage of an aircraft. The demodulator 324 may e.g. be provided inside of the aircraft as an electronic module that may be installed in the aircraft electrical system.

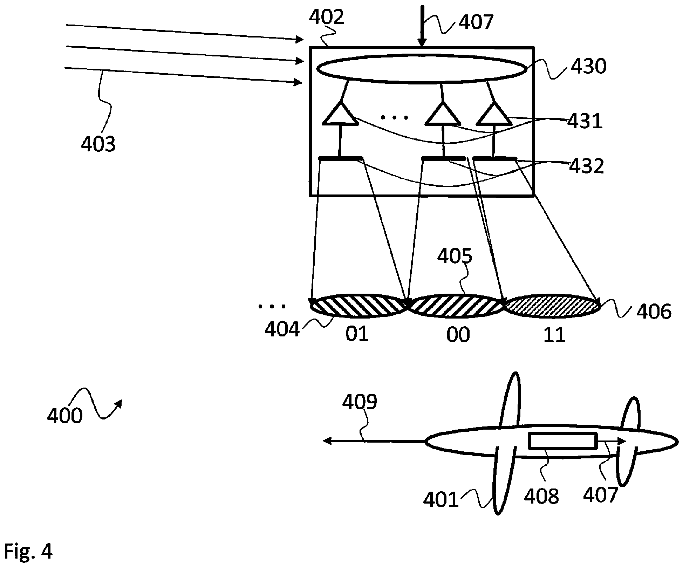

Fig. 4 shows a block diagram of another embodiment of a communication system 400. The communication system 400 is based on the communication system 100 and also comprises the moving vessel 401 and the high altitude light modulation unit 402.

The moving vessel 401 may be the same as the moving vessel 101. However, the high altitude light modulation unit 402 of the communication system 400 is shown in more detail than the high altitude light modulation unit 102.

The high altitude light modulation unit 402 comprises an optical arrangement with a lens 430 that focuses the incoming sunlight 403 onto prisms 431. From the prisms 431 the incoming sunlight 403 is directed to mirrors 432 that direct the incoming sunlight 403 to the respective modulation regions 404, 405, 406.

Although only one lens 430 is shown, it is understood that a plurality of lenses may e.g. be provided. For example one lens 430 may be provided for every one of the modulation regions 404, 405, 406.

The prisms 431 may e.g. serve to direct the incoming sunlight 403 and/or to split the incoming sunlight 403 into light of different colors. From the prisms 431 the incoming sunlight 403 or the separated light with the respective color is then provided to the mirrors 432. The mirrors 432 may e.g. be controllably positioned such that the respective light may be directed to the required one of the modulation regions 404, 405, 406.

In Fig. 4 exemplarily three modulation regions 404, 405, 406 are shown, which are each provided with light of a different color. The moving vessel 401 is shown in modulation region 406 that is provided with light that represents a binary "11 ". When traveling in the direction 409, the moving vessel 401 will cross the next modulation region 405 that is provided with light that represents a binary "00". Finally, the moving vessel 401 will cross the modulation region 404 that is provided with light that represents a binary "01 ". Further modulation regions are hinted at by three dots. After traveling the three modulation regions 406, 405, 404, the incoming light demodulation unit 408 will therefore have received the binary data "010011". The binary "11" of the modulation region 406 representing the least significant bits.

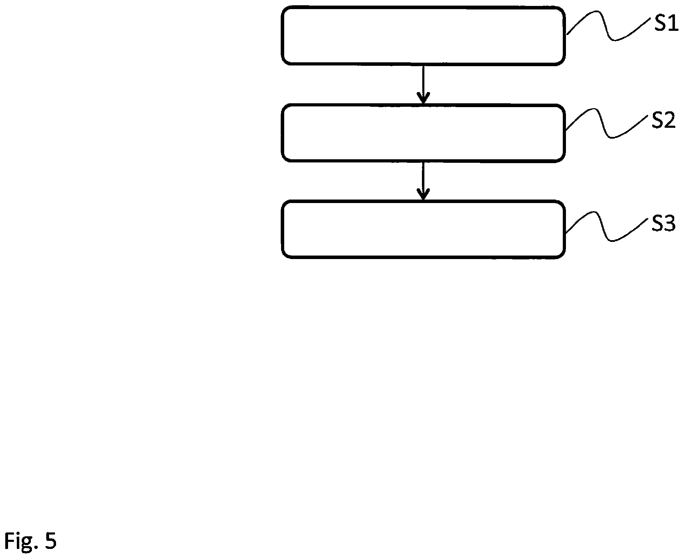

For sake of clarity, the reference signs used above regarding the apparatus based Figs. 1 - 4 will also be used in the description of the method based Fig. 5 below.

Fig. 5 shows a flow diagram of an embodiment of a communication method for communicating data to a moving vessel 101, 401.

The communication method comprises orbiting S1 a high altitude light modulation unit 102, 202, 402 over the earth's surface 150. Further, incoming sunlight 103, 403 is regionally modulated S2 onto the earth's surface 150 according to a downlink data stream 107, 207, 307, 407 with the high altitude light modulation unit 102, 202, 402. Finally, the regionally modulated sun light is demodulated S3 with an incoming light demodulation unit 108, 308, 408 in the moving vessel 101, 401 to recover the downlink data stream 107, 207, 307, 407.

Regionally modulating S2 may comprise controlling a controllable optical arrangement. Such a controllable optical arrangement may e.g. comprise controllable mirrors 217, 218, 219, 220, 432 and/or controllable prisms 431 and/or controllable lenses 430, to modulate and/or direct the incoming sunlight 103, 403 as required.

Regionally modulating S2 may also comprise providing light of specific wavelengths, especially with filters 212 in the controllable optical arrangement.

In addition or as alternative, regionally modulating S2 may comprise controllably absorbing or allowing transmission of the incoming sunlight 103, 403, especially with a modulator of the high altitude light modulation unit 102, 202, 402. 12. Controllably absorbing or allowing transmission may e.g. be performed with a graphene-based modulator that modulates the incoming sunlight 103, 403.

The communication method may also comprise harvesting energy from the incoming sunlight 103, 403 for operating the high altitude light modulation unit 102, 202, 402.

Finally, the communication method may comprise synchronizing the regional modulation with the moving vessel 101, 401, especially with the position and/or path of the moving vessel 101, 401.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

Thus the present invention provides a communication system 100, 400 for communicating data to a moving vessel 101, 401, the communication system 100, 400 comprising a high altitude light modulation unit 102, 202, 402 configured to orbit over the earth's surface 150 and regionally modulate incoming sunlight 103, 403 onto the earth's surface 150 according to a downlink data stream 107, 207, 307, 407, and an incoming light demodulation unit 108, 308, 408 arranged on the moving vessel 101, 401 and configured to demodulate the regionally modulated sun light to recover the downlink data stream 107, 207, 307, 407 in the moving vessel 101, 401.

### List of reference signs

- 100, 400: communication system
- 101, 401: moving vessel
- 102, 202, 402: high altitude light modulation unit
- 103, 403: incoming sunlight
- 104, 105, 106, 404, 405, 406: modulation region
- 107, 207, 307, 407: downlink data stream
- 108, 308, 408: incoming light demodulation unit
- 109, 409: direction of movement

- 210: path data
- 211: geographic data
- 212: color filter
- 213, 214, 215, 216: color
- 217, 218, 219, 220: mirror

- 322: sensor
- 323: electrical signal
- 324: demodulator

- 430: lens
- 431: prisms
- 432: mirrors

- 150: earth's surface

- S1, S2, S3: method steps

## Claims

1. Communication system (100, 400) for communicating data to a moving vessel (101, 401), the communication system (100, 400) comprising:
a high altitude light modulation unit (102, 202, 402) configured to orbit over the earth's surface (150) and regionally modulate incoming sunlight (103, 403) onto the earth's surface (150) according to a downlink data stream (107, 207, 307, 407), and
an incoming light demodulation unit (108, 308, 408) arranged on the moving vessel (101, 401) and configured to demodulate the regionally modulated sun light to recover the downlink data stream (107, 207, 307, 407) in the moving vessel (101, 401).

2. Communication system (100, 400) according to claim 1, wherein the high altitude light modulation unit (102, 202, 402) comprises a controllable optical arrangement, especially comprising controllable mirrors (217, 218, 219, 220, 432) and/or controllable prisms (431) and/or controllable lenses (430), configured to modulate and/or direct the incoming sunlight (103, 403).

3. Communication system (100, 400) according to claim 2, wherein the controllable optical arrangement comprises a plurality of filters (212) and is arranged to regionally modulate the incoming sunlight (103, 403) by providing light of specific wavelengths with the filters (212).

4. Communication system (100, 400) according to any one of the preceding claims, wherein the high altitude light modulation unit (102, 202, 402) comprises a modulator that is configured to controllably absorb or allow transmission of the incoming sunlight (103, 403).

5. Communication system (100, 400) according to claim 4, wherein the modulator comprises a graphene-based modulator that is configured to modulate the incoming sunlight (103, 403).

6. Communication system (100, 400) according to any one of the preceding claims, wherein the high altitude light modulation unit (102, 202, 402) comprises an energy harvesting device.

7. Communication system (100, 400) according to any one of the preceding claims, wherein the high altitude light modulation unit (102, 202, 402) comprises a synchronization unit configured to synchronize the high altitude light modulation unit (102, 202, 402) with the moving vessel (101, 401).

8. Communication method for communicating data to a moving vessel (101, 401), the communication method comprising:
orbiting (S1) a high altitude light modulation unit (102, 202, 402) over the earth's surface (150),
regionally (S2) modulating incoming sunlight (103, 403) onto the earth's surface (150) according to a downlink data stream (107, 207, 307, 407) with the high altitude light modulation unit (102, 202, 402), and
demodulating (S3) the regionally modulated sun light with an incoming light demodulation unit (108, 308, 408) in the moving vessel (101, 401) to recover the downlink data stream (107, 207, 307, 407).

9. Communication method according to claim 8, wherein regionally modulating (S2) comprises controlling a controllable optical arrangement, especially comprising controllable mirrors (217, 218, 219, 220, 432) and/or controllable prisms (431) and/or controllable lenses (430), to modulate and/or direct the incoming sunlight (103, 403).

10. Communication method according to claim 9, wherein regionally modulating (S2) comprises providing light of specific wavelengths, especially with filters (212) in the controllable optical arrangement.

11. Communication method according to any one of the preceding claims 8 to 10, wherein regionally modulating (S2) comprises controllably absorbing or allowing transmission of the incoming sunlight (103, 403), especially with a modulator of the high altitude light modulation unit (102, 202, 402).

12. Communication method according to claim 11, wherein regionally modulating (S2) is performed with a graphene-based modulator that modulates the incoming sunlight (103, 403).

13. Communication method according to any one of the preceding claims 8 to 12, comprising harvesting energy from the incoming sunlight (103, 403) for operating the high altitude light modulation unit (102, 202, 402).

14. Communication method according to any one of the preceding claims 8 to 13, comprising synchronizing the regional modulation with the moving vessel (101, 401), especially with the position and/or path of the moving vessel (101, 401).
